# EUROPEAN PATENT APPLICATION

(11) **EP 4 838 256 A1**
(43) Date of publication of application: **11.11.2026**
(21) Application number: 24915164.8
(22) Date of filing: 26.12.2024
(51) Int. Cl.: G01S 7/481, G01S 17/08, A47L 11/40, A47L 11/24

(54) **LIDAR AND ROBOTIC VACUUM CLEANER**

(30) Priority: 05.01.2024 CN 202410024551
(71) Applicant: Beijing Roborock Technology Co., Ltd., Beijing 102206 (CN)
(72) Inventor: LIU, Bo, Beijing 102206 (CN); ZHANG, Wei, Beijing 102206 (CN); LIANG, Bing, Beijing 102206 (CN); WU, Jiang, Beijing 102206 (CN); LIU, Dan, Beijing 102206 (CN)
(74) Representative: Lorenz Seidler Gossel Part. mbB
(86) International application number: PCT/CN2024/142596
(87) International publication number: WO 2025/145949

(57) **Abstract**

A LiDAR (001) and a robotic vacuum cleaner (002). The LiDAR (001) comprises: a fixed module (100), the fixed module (100) comprising a fixed seat (130) and, mounted on the fixed seat (130), a transmitting unit (110) and a receiving unit (120); and a rotary module (200), the rotary module (200) comprising a rotary seat (220) and a reflecting mirror (210) mounted on the rotary seat (220). The rotary seat (220) is rotatably connected to the fixed seat (130); the reflecting mirror (210) is obliquely arranged above the transmitting unit (110) and the receiving unit (120); a transmitting window (221) and receiving windows (222) are provided in the rotary seat (220); the receiving windows (222) are distributed in pairs on both sides of the transmitting window (221); transmitted light rays emitted from the transmitting unit (110) are redirected by the reflecting mirror (210) and then are projected out via the transmitting window (221); returned received light rays pass through the receiving window (222), are redirected by the reflecting mirror (210) and then are received by the receiving unit (120).

## Description

The present disclosure claims priority to Chinese Patent Application No. 202410024551.5, filed with the China National Intellectual Property Administration on January 5, 2024 and entitled "LIDAR AND CLEANING ROBOT", which is incorporated herein by reference in its entirety.

### TECHNICAL FIELD

The present disclosure relates to the technical field of smart homes, and in particular, to a lidar and a cleaning robot.

### BACKGROUND ART

With the continuous development of science and technology and the ongoing improvement of people's living standards, cleaning robots, such as intelligent sweeping robots, have increasingly become part of our daily lives. Currently, a cleaning robot is usually provided with a lidar to detect an environment around the cleaning robot. The lidar is an important sensor for the cleaning robot, and plays an important role in operating conditions such as mapping, navigation, and obstacle avoidance. In addition, the overall dimensions of the lidar also have a certain impact on the volume of the cleaning robot.

### SUMMARY OF THE INVENTION

A series of simplified concepts is introduced in the SUMMARY section, which will be further described in detail in the DETAILED DESCRIPTION section below. This section of the present disclosure is not intended to attempt to define key features and essential technical features of the claimed technical solutions, nor is it intended to attempt to delineate the protection scope of the claimed technical solutions.

According to an embodiment of a first aspect of the present disclosure, a lidar is provided. The lidar includes: a fixed module, including a fixed base, and an emission unit and a receiving unit that are mounted on the fixed base; and a rotating module, including a rotating base and a reflecting mirror mounted on the rotating base, the rotating base being rotatably connected to the fixed base, the reflecting mirror being obliquely disposed above the emission unit and the receiving unit, the rotating base being provided with an emission window and receiving windows, and the receiving windows being distributed on two sides of the emission window in pairs; where an emitted light ray emitted by the emission unit is changed in direction by the reflecting mirror and then projected out through the emission window, and a returned received light ray passes through the receiving window, is changed in direction by the reflecting mirror, and then is received by the unit.

In one feasible embodiment, a dimension of the reflecting mirror includes a first dimension Dv and a second dimension Dh that are perpendicular to each other, a direction of the first dimension is parallel to a horizontal line, a dimension of an emission aperture of the emission unit is D1, and a dimension of a receiving aperture of the receiving unit is D2, where Dv satisfies that: D1 < Dv/1.414 < D2, and Dh satisfies that: D2 < Dh.

In one feasible embodiment, an opening area of the emission window is greater than an exit area of the emission aperture.

In one feasible embodiment, the rotating module further includes: a first window lens, the first window lens being mounted on the rotating base and corresponding to the emission window, and the first window lens being configured to shield the emission window, where the first window lens is disposed obliquely relative to a light output axis of the reflecting mirror.

In one feasible embodiment, a range of an inclination angle of the first window lens relative to the light output axis of the reflecting mirror is at least 2° and no more than 45°.

In one feasible embodiment, the rotating base includes a base body and an upper cover that are detachably connected, the base body is provided with a first slot, the upper cover is provided with a second slot, and the upper cover is connected to the base body, to clamp two ends of the first window lens in the first slot and the second slot, respectively.

In one feasible embodiment, the emission unit includes a laser emitter and an emission lens that are sequentially disposed, the receiving unit includes a receiver and a receiving lens that are sequentially disposed, and the emission lens and the receiving lens are coaxially disposed.

In one feasible embodiment, the rotating base is configured to rotate relative to the fixed base with an optical axis of the emission lens and/or an optical axis of the receiving lens as a rotation axis, where a diameter of the emission lens is equal to a dimension of an emission aperture of the emission unit, and a diameter of the receiving lens is equal to a dimension of a receiving aperture of the receiving unit.

In one feasible embodiment, the fixed module further includes a mounting barrel with openings at two ends, and the laser emitter and the emission lens are mounted at the two ends of the mounting barrel, respectively; a middle portion of the receiving lens is provided as a hollow structure, the mounting barrel passes through the hollow structure and is connected to the receiving lens, and the receiver is arranged below the receiving lens and opposite to the laser emitter.

In one feasible embodiment, a range of a diameter of the receiving lens is at least 10 mm and no more than 20 mm; and/or a range of a diameter of the hollow structure is at least 5 mm and no more than 10 mm; and/or a range of a focal length of the receiving lens is at least 8 mm and no more than 20 mm; and/or a range of a ratio of the diameter to the focal length of the receiving lens is at least 0.8 and no more than 2.2; and/or a range of a diameter of the emission lens is at least 3 mm and no more than 8 mm; and/or a range of a focal length of the emission lens is at least 3 mm and no more than 10 mm.

In one feasible embodiment, fitting surfaces of the mounting barrel and the receiving lens are in spherical contact, and the mounting barrel and the receiving lens are configured to be fixedly connected.

In one feasible embodiment, the fixed module further includes a light-homogenizing element, and the light-homogenizing element is located between the receiver and the receiving lens.

In one feasible embodiment, an inclination angle of the reflecting mirror relative to a horizontal line is at least 45° and no more than 47°.

In one feasible embodiment, the reflecting mirror includes a reflective surface and a substrate, the reflective surface being located on a side of the substrate facing the emission window; where the reflective surface is a dielectric high-reflection film or a metal reflection film, and the substrate is glass or plastic.

In one feasible embodiment, the rotating module further includes an optical filter mounted on the rotating base, and the optical filter corresponds to the receiving window and is located between the receiving window and the reflecting mirror.

In one feasible embodiment, a bandwidth specification of the optical filter is less than or equal to 50 nm.

In one feasible embodiment, the lidar further includes: a driving part and a transmission part, the driving part being mounted on the fixed base, the transmission part connecting the driving part and the rotating base, and the driving part driving, by means of the transmission part, the rotating base to rotate relative to the fixed base.

In one feasible embodiment, the number of the receiving windows is at least one pair.

According to a second aspect of the present disclosure, a cleaning robot is provided, which includes: a device main body; and the lidar according to any one of the embodiments of the first aspect, the lidar being disposed on the device main body.

The above description is only an overview of the technical solutions of the present disclosure. To more clearly understand the technical means of the present disclosure to enable implementation in accordance with the content of the specification and to make the above and other objectives, features, and advantages of the present disclosure more obvious and easy to understand, the detailed description of the present disclosure is provided below.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same components are denoted by the same reference numerals throughout the drawings. In the drawings:
FIG. 1 shows a schematic structural diagram of a lidar according to an embodiment of the present disclosure;
FIG. 2 shows a schematic structural diagram of the embodiment shown in FIG. 1 from a first perspective;
FIG. 3 shows a cross-sectional view of the embodiment shown in FIG. 1 from an A-A perspective;
FIG. 4 shows a partially enlarged schematic diagram of portion A in the embodiment shown in FIG. 3;
FIG. 5 shows a partially enlarged schematic diagram of portion B in the embodiment shown in FIG. 3;
FIG. 6 shows a schematic structural diagram of a part of a lidar according to an embodiment of the present disclosure;
FIG. 7 shows a schematic structural diagram of a fixed base according to one embodiment of the present disclosure;
FIG. 8 shows a schematic structural diagram of a limiting ring according to one embodiment of the present disclosure;
FIG. 9 shows a schematic structural diagram of another part of a lidar according to one embodiment of the present disclosure;
FIG. 10 shows a schematic structural diagram of yet another part of a lidar according to one embodiment of the present disclosure;
FIG. 11 shows a schematic structural diagram of the embodiment shown in FIG. 10 from one perspective;
FIG. 12 shows a schematic structural diagram of the embodiment shown in FIG. 10 from a second perspective;
FIG. 13 shows a schematic structural diagram of still another part of a lidar according to one embodiment of the present disclosure;
FIG. 14 shows a cross-sectional view of the embodiment shown in FIG. 13 from one perspective;
FIG. 15 shows a projection view of a receiving lens and an emission lens from one perspective according to one embodiment of the present disclosure; and
FIG. 16 shows a schematic structural diagram of a cleaning robot according to one embodiment of the present disclosure.

### Description of reference numerals

001: lidar, 100: fixed module, 110: emission unit, 111: laser emitter, 112: emission lens, 1121: first incident surface, 1122: first exit surface, 1123: limiting groove, 113: emission circuit, 120: receiving unit, 121: receiver, 122: receiving lens, 1221: concave spherical contact surface, 130: fixed base, 131: mounting groove, 132: first step, 133: threaded structure, 134: second step, 1341: clearance notch, 135: second supporting part, 140: mounting barrel, 141: convex spherical contact surface, 142: first boss, 143: second boss, 150: light-homogenizing element, 160: pressing ring, 161: positioning groove, 170: light-shielding ring, 180: limiting ring, 181: snap-fit part, 182: first supporting part, 200: rotating module, 210: reflecting mirror, 220: rotating base, 221: emission window, 222: receiving window, 223: base body, 2231: first slot, 2232: belt groove, 224: upper cover, 2241: second slot, 230: window lens, 240: optical filter, 300: driving part, 310: timing pulley, 400: main circuit, 500: bearing, 600: locking member, 700: transmission part, 002: cleaning robot, 021: device main body.

### DETAILED DESCRIPTION

In the following description, numerous specific details are set forth to provide a more thorough understanding of the technical solutions according to the present disclosure. However, it will be apparent to those skilled in the art that the technical solutions according to the present disclosure may be implemented without one or more of these details.

It should be noted that the terms used herein are only for the purpose of describing specific embodiments, and are not intended to limit exemplary embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the stated features, integers, steps, operations, elements, and/or assemblies, but do not exclude the presence or addition of one or more other features, integers, steps, operations, elements, assemblies, and/or combinations thereof.

Exemplary embodiments according to the present disclosure will now be described in more detail with reference to the drawings. However, these exemplary embodiments may be implemented in various forms and should not be construed as being limited to the embodiments set forth herein. It should be understood that these embodiments are provided to make the disclosure of the present disclosure thorough and complete, and to fully convey the concepts of these exemplary embodiments to those of ordinary skill in the art.

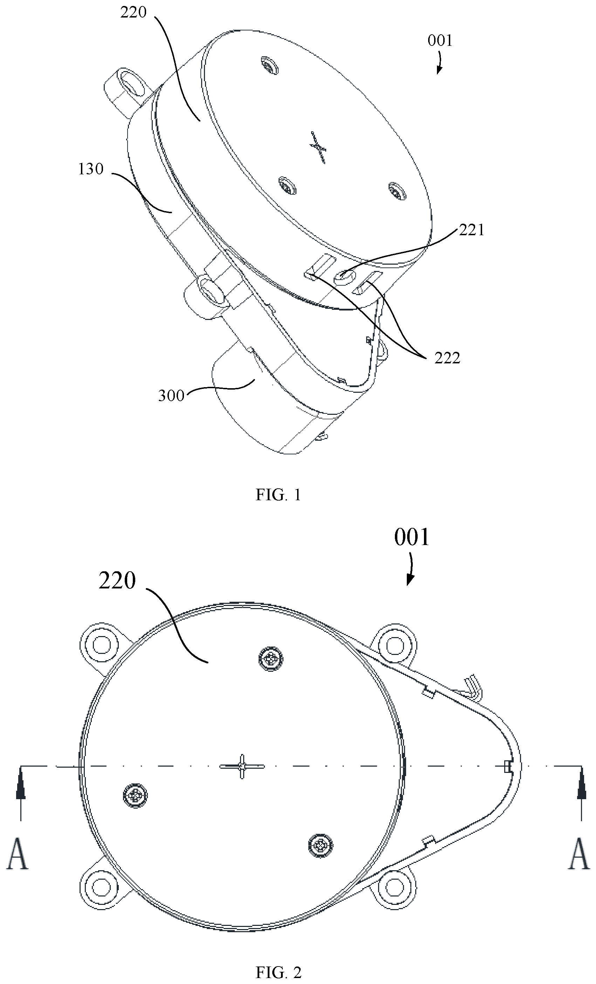

As shown in FIGs. 1 to 16, embodiments of a first aspect of the present disclosure provide a lidar 001, and embodiments of a second aspect of the present disclosure provide a cleaning robot 002. The cleaning robot 002 may be a sweeping robot, a sweeping and mopping integrated machine, or another cleaning robot 002 that meets requirements. The lidar 001 is applied to the cleaning robot 002.

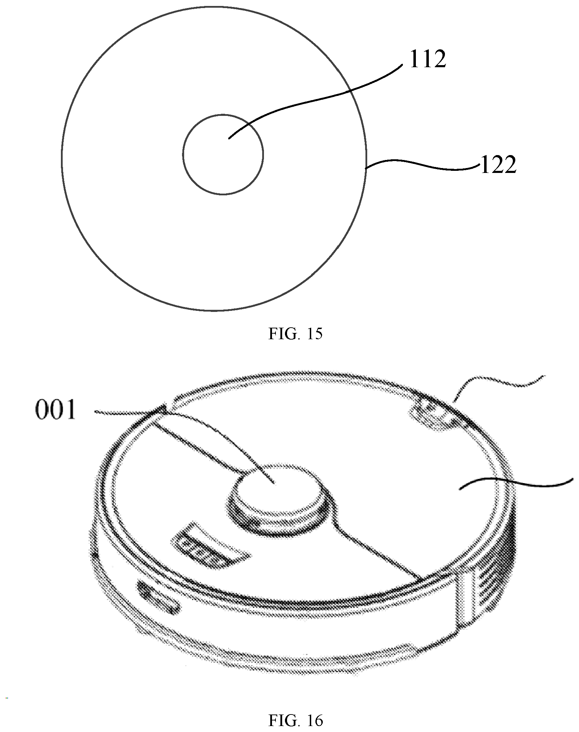

Specifically, as shown in FIG. 16, the cleaning robot 002 includes, but is not limited to: a device body, a cleaning system, a driving system, a sensing system, a control module, a power system, a human-machine interaction system, and the like. The systems described above cooperate with each other, such that the cleaning robot 002 can move autonomously to achieve a cleaning function. In the cleaning robot 002, functional elements and the like constituting the systems described above are integrally disposed in the device body. The sensing system may include the lidar 001. The lidar 001 is configured to detect information about an obstacle and an environment around the cleaning robot 002. For example, the lidar 001 may achieve distance detection.

As shown in FIGs. 1, 10, 11, and 12, the lidar 001 provided in the embodiments of the present disclosure includes: a fixed module 100 and a rotating module 200. The fixed module 100 includes a fixed base 130, and an emission unit 110 and a receiving unit 120 that are mounted on the fixed base 130. The rotating module 200 includes a rotating base 220 and a reflecting mirror 210 mounted on the rotating base 220. The rotating base 220 rotates with the fixed base 130, the reflecting mirror 210 is obliquely disposed above the emission unit 110 and the receiving unit 120, the rotating base 220 is provided with an emission window 221 and receiving windows 222, and the receiving windows 222 are distributed on two sides of the emission window 221 in pairs.

The emitted light ray emitted by the emission unit 110 is changed in direction by the reflecting mirror 210 and then projected out through the emission window 221 to be emitted to the obstacle and the surrounding environment, and the received light ray returned by the obstacle or the surrounding environment passes through the receiving window 222, is changed in direction by the reflecting mirror 210, and then is received by the receiving unit 120, such that the ranging function of the lidar 001 can be realized. The rotation of the rotating base 220 relative to the fixed base 130 can drive the reflecting mirror 210 to rotate relative to the emission unit 110 and the receiving unit. Therefore, the rotating reflecting mirror 210 cooperates with the emission unit 110 and the receiving unit 120 to expand a detection range of the laser emitter 111, thereby detecting obstacles and surrounding environments in a plurality of directions around the cleaning robot 002. For example, the rotating base 220 is configured to be rotatable by 360° relative to the fixed base 130, such that the lidar 001 can detect an obstacle and a surrounding environment in a direction of 360° around the cleaning robot 002, thereby improving the sensing precision and sensing accuracy of the cleaning robot 002, and improving the operation accuracy of the cleaning robot 002.

In the embodiments, the cleaning robot 002 of the lidar 001 device main body 021 cleaning robot 002 cleaning robot 002 cleaning robot 002 cleaning robot 002 cleaning robot 002 the receiving windows 222 are arranged in pairs on two sides of the emission window 221. That is, centered on the emission window 221, an equal number of receiving windows 222 are arranged on two sides of the emission window 221. Therefore, the consistency of detection structures at various angles of the lidar 001 can be improved. For example, the consistency of ranging at various angles of the lidar 001 can be improved.

Further, along a circumferential direction of the rotating base 220, the receiving windows 222 are arranged on two sides of the emission window 221 in pairs; that is, along the circumferential direction of the rotating base 220, the projections of the receiving windows 222 in a horizontal plane are located on two sides of the projection of the emission window 221 in the horizontal plane. In this way, the height of the lidar 001 can be reduced, such that the lidar 001 can be conveniently and accurately mounted on the device main body 021 of the cleaning robot 002, facilitating the mounting of the cleaning robot 002. In addition, the overall height of the cleaning robot 002 can be reduced, meeting the design requirements for a compact structure and a small volume of the cleaning robot 002, reducing the space occupied by the cleaning robot 002, expanding the application range of the cleaning robot 002, and facilitating storage.

It can be understood that the shape of the emission window 221 and the shape of the receiving window 222 may be the same or different. As shown in FIG. 1, the shape of the emission window 221 is circular, and the shape of the receiving window 222 is rectangular.

It can be understood that, in a horizontal direction, the geometric center of the emission window 221 and the geometric center of the receiving window 222 may be flush or staggered.

Specifically, the number of the receiving windows 222 may be one pair, two pairs, three pairs, or other number pairs, that is, one receiving window 222, two receiving windows 222, three receiving windows 222, or other number of receiving windows 222 may be arranged on each side of the emission window 221 in the horizontal direction. It can be understood that the number of pairs of the receiving windows 222 may be reasonably selected based on the dimension of the lidar 001. As shown in FIG. 1, the number of pairs of the receiving windows 222 is one pair.

The rotating base 220 is rotatably connected to the fixed base 130 and encloses a mounting chamber. The reflecting mirror 210, the emission unit 110, and the receiving unit 120 are located in the mounting chamber, which can ensure that the emission unit 110, the receiving unit 120, and the reflecting mirror 210 are located in a closed space, thereby reducing stray light interference, and improving the detection accuracy of the lidar 001.

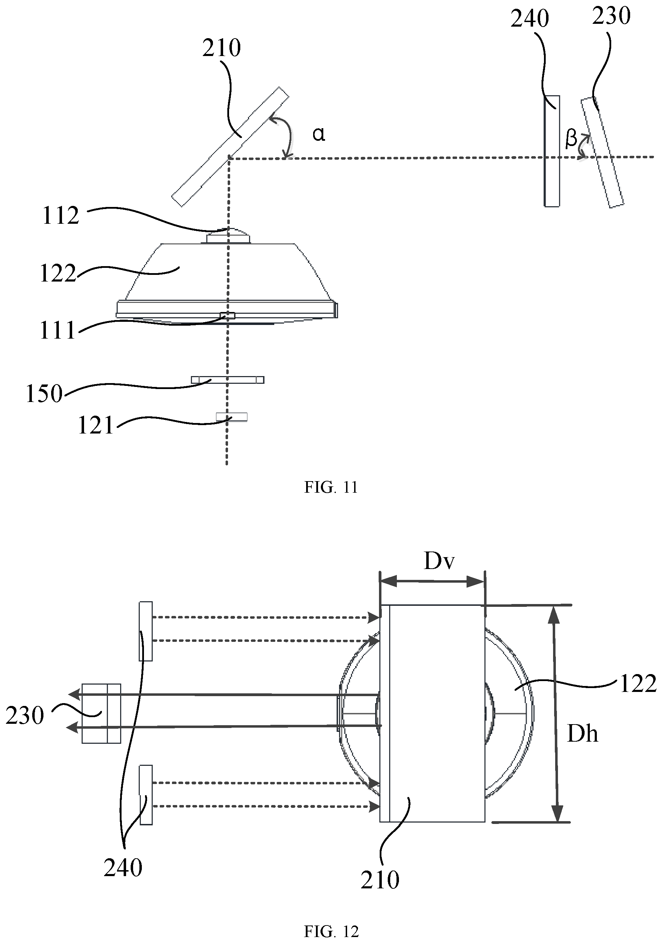

As shown in FIG. 12, in some possible embodiments according to the present disclosure, the dimension of the reflecting mirror 210 includes a first dimension Dv and a second dimension Dh that are perpendicular to each other, and a direction of the first dimension Dv is parallel to a horizontal line. For example, the first dimension Dv may be understood as the width of the reflecting mirror 210, and the second dimension Dh may be understood as the length of the reflecting mirror 210. It can be understood that the reflecting mirror 210 may further include a third dimension, and the third dimension may be understood as the thickness of the reflecting mirror 210. The dimension of an emission aperture of the emission unit 110 is D1, and the dimension of a receiving aperture of the receiving unit 120 is D2, where Dv satisfies: D1 < Dv/1.414 < D2, and Dh satisfies: D2 < Dh.

This arrangement, on the basis of ensuring that the lidar 001 has a sufficient receiving area, can effectively reduce the height of the lidar 001, such that the lidar 001 can be conveniently and accurately mounted on the device main body 021 of the cleaning robot 002, facilitating the mounting of the cleaning robot 002. In addition, the overall height of the cleaning robot 002 can be reduced, thereby reducing the space occupied by the cleaning robot 002, expanding the application range of the cleaning robot 002, and facilitating storage.

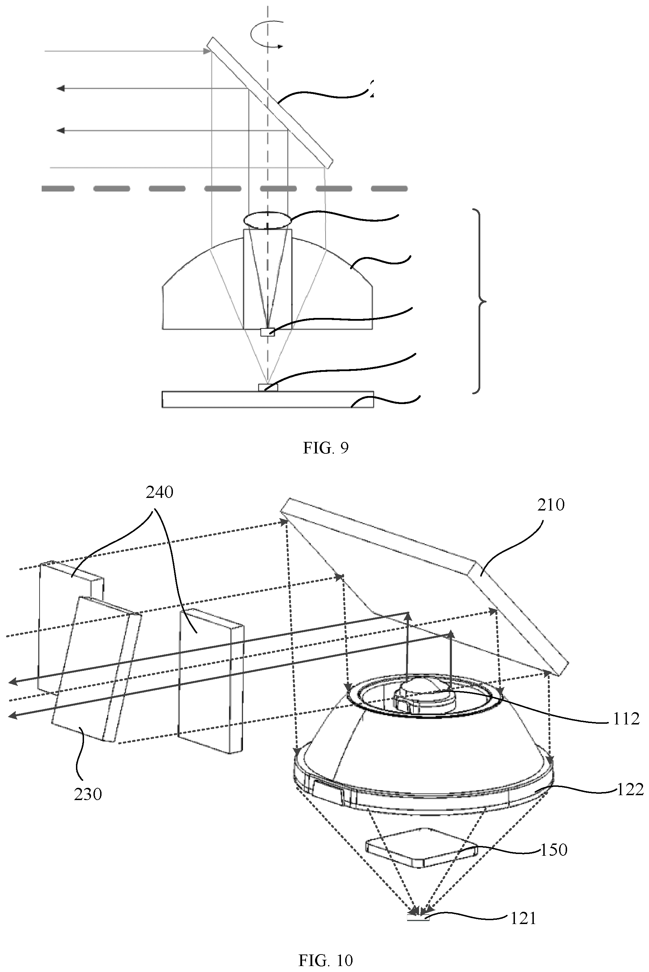

As shown in FIGs. 2, 3, 9, and 10, in the above embodiments, the emission unit 110 includes a laser emitter 111 and an emission lens 112 that are sequentially disposed, and the receiving unit 120 includes a receiver 121 and a receiving lens 122 that are sequentially disposed. The light ray emitted by the laser emitter 111 passes through the emission lens 112, is changed in direction by the reflecting mirror 210, and then is emitted to the obstacle and the surrounding environment through the emission window 221, and the received light ray returned by the obstacle and the surrounding environment passes through the receiving window 222, is changed in direction by the reflecting mirror 210, passes through the receiving lens 122, and then is received by the laser receiver 121, such that the detection function of the lidar 001 is realized. Specifically, the solid lines in FIG. 10 represent the emitted light ray, and the dashed lines in FIG. 10 represent the received light ray.

The dimension D1 of the emission aperture may be equal to the diameter of the emission lens 112, and the dimension D2 of the receiving aperture may be equal to the diameter of the receiving lens 122.

As shown in FIGs. 1, 10, and 12, in some possible embodiments provided by the present disclosure, an opening area of the emission window 221 is greater than an area of an exit surface of the emission aperture. The emission aperture may be understood as the emission lens 112 of the emission unit 110. That is, the opening area of the emission window 221 needs to be greater than the area of the exit surface of the emission lens 112. This arrangement can ensure that the area of the emission window 221 is large enough, such that the light ray emitted by the emission unit 110 is enabled to be relatively comprehensively projected out through the emission window 221 after the angle of the light ray is changed by the reflecting lens, thereby reducing the energy loss of the emission unit 110 and improving the energy utilization of the emission unit 110.

Specifically, the emission window 221 may have a circular shape, a rectangular shape, or other shapes. When the emission window 221 is a circular window, the dimension of the emission window 221 may be understood as the diameter of the emission window 221. In this case, the diameter of the emission window 221 is greater than the diameter of the emission lens 112. When the emission window 221 is a rectangular window, both the length and the width of the emission window 221 are greater than the diameter of the emission lens 112.

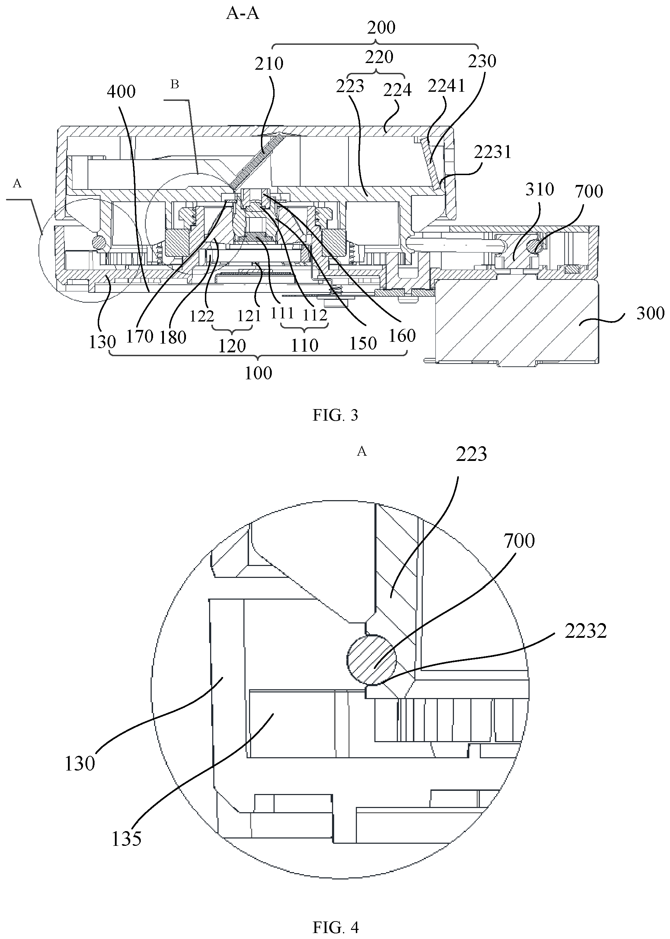

As shown in FIGs. 3, 10, 11, and 12, in some possible embodiments according to the present disclosure, the lidar 001 further includes a first window lens 230. The first window lens 230 is mounted on the rotating base 220 and corresponds to the emission window 221, and the first window lens 230 is configured to shield the emission window 221. The first window lens 230 is obliquely disposed relative to the light output axis of the reflecting mirror 210, such that the first window lens 230 is not completely perpendicular to the light output axis of the reflecting mirror 210, thereby avoiding optical back-reflection crosstalk, and thus improving the ranging accuracy of the lidar 001.

Further, as shown in FIG. 11, the inclination angle of the first window lens 230 relative to the light output axis of the reflecting mirror 210 is β, and the range of β is 2° to 45°, that is, β is at least 2° and no more than 45°. Specifically, the inclination angle of the first window lens 230 relative to the light output axis of the reflecting mirror 210 may be reasonably set based on the disposing position and dimension of the reflecting mirror 210, thereby effectively avoiding optical back-reflection crosstalk. Specifically, the inclination angle β of the first window lens 230 relative to the light output axis of the reflecting mirror 210 may be 2°, 15°, 30°, 45°, or other angles.

As shown in FIG. 3, in some possible embodiments according to the present disclosure, the rotating base 220 includes a base body 223 and an upper cover 224 that are detachably connected. The reflecting mirror 210 is mounted on the base body 223, and the base body 223 is rotatably connected to the fixed base 130, so as to drive the reflecting mirror 210 to rotate relative to the fixed base 130. The base body 223 is provided with a first slot 2231, the upper cover 224 is provided with a second slot 2241, and the upper cover 224 is connected to the base body 223, to clamp two ends of the first window lens 230 in the first slot 2231 and the second slot 2241, respectively, that is, the first window lens 230 is clamped between the upper cover 224 and the base body 223 by using the upper cover 224 and the base body 223, thereby realizing the connection between the first window lens 230 and the rotating base 220. Compared with the related art in which the first window lens is mounted on the rotating base by using an adhesive, this mounting method of the first window lens 230 saves the cost of an adhesive, which is conducive to reducing the manufacturing cost of the lidar 001, thereby meeting the design requirement of the lidar 001 for a low cost.

Specifically, the upper cover 224 and the base body 223 may be connected by means of a snap-fit structure, a threaded structure 133, an adhesive, or the like.

As shown in FIGs. 3, 9, 10, and 11, in some possible embodiments provided by the present disclosure, the laser emitter 111 and the emission lens 112 of the emission unit 110 are sequentially disposed; for example, the laser emitter 111 is arranged directly below the emission lens 112. The receiver 121 and the receiving lens 122 of the receiving unit 120 are sequentially arranged; for example, the receiver 121 is arranged directly below the receiving lens 122. The emission lens 112 and the receiving lens 122 are coaxially disposed, and the rotating base 220 is configured to rotate relative to the fixed base 130 with the optical axis of the emission lens 112 and/or the optical axis of the receiving lens 122 as a rotation axis.

The optical axis of the reflecting mirror 210, the optical axis of the receiving lens, and the rotation axis of the rotating base 220 are coaxially disposed. The optical axis of the emission lens 112 and the optical axis of the receiving lens 122 are coaxially disposed, which is conducive to reducing the volume of the lidar 001 compared with the related art in which the optical axis of the emission lens and the optical axis of the receiving lens are arranged separately, thereby meeting the design requirements of the lidar 001 for a small volume and a compact structure, reducing the space occupied by the cleaning robot 002, expanding the application range of the cleaning robot 002, facilitating storage, and saving the manufacturing cost.

The optical axis of the reflecting mirror 210, the optical axis of the receiving lens, and the rotation axis of the rotating base 220 are coaxially disposed, which is conducive to improving the consistency of ranging at various angles of the lidar 001.

In some possible embodiments provided by the present disclosure, the fixed module 100 further includes a mounting barrel 140 with openings at two ends, and the laser emitter 111 and the emission lens 112 are mounted at the two ends of the mounting barrel 140, respectively. The emission lens 112 is located on an emission optical path of the laser emitter 111, and an exit surface of the emission lens 112 faces the outside of the mounting barrel 140. Therefore, the emission lens 112 and the laser are mounted in the same structural member, such that a collimated optical path can be formed.

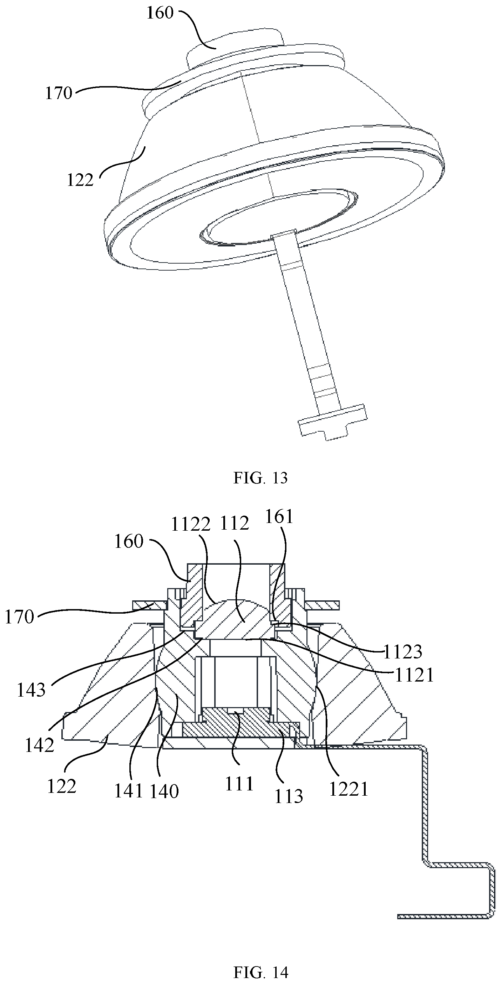

Further, as shown in FIGs. 13, 14, and 15, the middle portion of the receiving lens 122 is provided as a hollow structure, the mounting barrel 140 passes through the hollow structure and is connected to the receiving lens 122, and the receiver 121 is arranged below the receiving lens 122 and opposite to the laser emitter 111. Therefore, the optical axis of the receiving lens 122 and the optical axis of the emission lens 112 can be coaxially disposed, and it can be ensured that the receiver 121 reliably receives the light ray projected by the receiving lens 122, such that the structure is simple. Specifically, the mounting barrel 140 may have a cylindrical shape, a conical shape, a bowl shape, or other shapes.

In the above embodiments, the mating surface between the mounting barrel 140 and the receiving lens 122 is in spherical contact, and the mounting barrel 140 and the receiving lens 122 are configured to be fixedly connected.

That is, the lens barrel and the receiving lens 122 are configured as a ball joint. In this way, in actual application scenarios, during assembly, the relative positions of the mounting barrel 140 and the emission lens 112 can be adjusted first, enabling the laser emission direction of the emission unit 110 and the optical axis of the receiving lens 122 to meet the detection accuracy requirements. For example, the position of the mounting barrel 140 relative to the emission lens 112 may be adjusted, such that the optical axis of the emission lens 112 coincides with the optical axis of the receiving lens 122, or the optical axis of the emission lens 112 is perpendicular to the horizontal line to ensure that the emission optical axis of the emission unit 110 is oriented vertically upward, and then the mounting barrel 140 is fixedly connected to the receiving lens 122 to complete the assembly of the emission unit 110 and the receiving lens 122 and ensure that the lidar 001 meets the detection accuracy requirements. In this way, the processing accuracy requirements for the elements can be lowered, thereby reducing the manufacturing cost. In addition, this method can improve the processing yield of the product, making it suitable for promotion and application.

The optical axis of the emission lens 112 and the optical axis of the receiving lens 122 are coaxially disposed. Compared with the related art in which the optical axis of the emission lens and the optical axis of the receiving lens are arranged separately, the volume of the lidar 001 can be appropriately reduced, thereby meeting the design requirements for a small volume and a compact structure of the lidar 001, reducing the space occupied by the cleaning robot 002, expanding the application range of the cleaning robot 002, facilitating storage, and meanwhile, helping reduce the manufacturing cost of the lidar 001.

Further, the mounting barrel 140 and the receiving lens 122 may be fixedly connected by means of an adhesive, a threaded structure, a mortise-and-tenon structure, or the like. The mounting barrel 140 and the receiving lens 122 are fixedly connected by means of an adhesive, which is simple to operate and facilitates assembly, and can ensure that the relative positions of the mounting barrel 140 and the receiving lens 122 are reliable and stable after the fixed connection, thereby improving the detection accuracy of the lidar 001.

As shown in FIG. 14, in some possible embodiments according to the present disclosure, the outer peripheral side of the mounting barrel 140 is provided with a convex spherical contact surface 141, the inner peripheral side of the receiving lens 122 is provided with a concave spherical contact surface 1221, and the convex spherical contact surface 141 is disposed opposite to and is at least partially mated with the concave spherical contact surface 1221. Therefore, the mounting barrel 140 and the receiving lens 122 form a ball joint, such that the positions of the mounting barrel 140 and the receiving lens 122 can be adjusted, thereby enabling universal adjustment of the direction of an emitted light beam from the emission unit 110. The convex spherical contact surface 141 and the concave spherical contact surface 1221 are easy to implement and process, and have relatively low manufacturing costs. It can be understood that the shape enclosed by the inner peripheral side of the receiving lens 122 is the shape of the hollow structure.

In some possible embodiments provided by the present disclosure, the range of the diameter of the receiving lens 122 is 10 mm to 20 mm, that is, the range of the diameter of the receiving lens 122 is at least 10 mm and no more than 20 mm. Specifically, the diameter of the receiving lens 122 may be 10 mm, 14 mm, 16 mm, 20 mm, or other dimensions.

The range of the diameter of the hollow structure of the receiving lens 122 is 5 mm to 10 mm, that is, the range of the diameter of the hollow structure is at least 5 mm and no more than 10 mm. Specifically, the diameter of the hollow structure of the receiving lens 122 may be 5 mm, 6 mm, 8 mm, 10 mm, or other dimensions. It can be understood that since the hollow structure may have an irregular shape, the diameter of the hollow structure can be understood as the maximum diameter of the hollow structure.

The range of the focal length of the receiving lens 122 is 8 mm to 20 mm, that is, the range of the focal length of the receiving lens 122 is at least 8 mm and no more than 20 mm. Specifically, the focal length of the receiving lens 122 may be 8 mm, 14 mm, 16 mm, 20 mm, or other dimensions.

The range of the ratio of the diameter to the focal length of the receiving lens 122 is 0.8 to 2.2, that is, the range of the ratio of the diameter to the focal length of the receiving lens 122 is at least 0.8 and no more than 2.2. Specifically, the ratio of the diameter to the focal length of the receiving lens 122 may be 0.8, 1, 1.5, 2, 2.2, or other values.

The range of the diameter of the emission lens 112 is 3 mm to 8 mm, that is, the range of the diameter of the emission lens 112 is at least 3 mm and no more than 8 mm. Specifically, the diameter of the emission lens 112 may be 3 mm, 5 mm, 6 mm, 8 mm, or other dimensions.

The range of the focal length of the emission lens 112 is 3 mm to 10 mm, that is, the range of the focal length of the emission lens 112 is at least 3 mm and no more than 10 mm. Specifically, the focal length of the emission lens 112 may be 3 mm, 6 mm, 8 mm, 10 mm, or other dimensions.

The material of the receiving lens 122 may be glass, PMMA (polymethyl methacrylate, polymethyl methacrylate), or PC (polycarbonate, polycarbonate).

The material of the emission lens 112 may be glass, PMMA (polymethyl methacrylate, polymethyl methacrylate), or PC (polycarbonate, polycarbonate).

The laser emitter 111 may be an LD (laser diode, semiconductor laser), a VCSEL (vertical cavity surface emitting laser, vertical cavity surface emitting laser), or the like.

The receiver 121 mainly includes a PIN (positive-intrinsic-negative, photodiode), an APD (avalanche photon diode, avalanche diode), a SPAD (single photon avalanche diode, single-photon detector), a SIPM (silicon photomultiplier, silicon photomultiplier), and the like (the SPAD is used in Qiuniu).

As shown in FIGs. 10 and 11, in some possible embodiments according to the present disclosure, the fixed module 100 further includes a light-homogenizing element 150. The light-homogenizing element 150 is located between the receiver 121 and the receiving lens 122.

The arrangement of the light-homogenizing element 150 can improve the echo uniformity at the photosensitive surface of the receiver 121. In this way, the ranging deviation during the operation of the lidar 001 can be reduced, thereby improving the ranging performance of the lidar. In addition, the calibration deviation during production of the lidar 001 can be reduced, thereby improving the production yield of the product.

The light-homogenizing element 150 mainly includes a ground glass, a diffuser plate, a DOE (diffractiveoptical element, diffractiveoptical element), or other optical elements having a light-homogenizing function.

As shown in FIG. 11, in some possible embodiments provided by the present disclosure, an inclination angle of the reflecting mirror 210 relative to the horizontal line is 45° to 47°, that is, the inclination angle of the reflecting mirror 210 relative to the horizontal line is at least 45° and no more than 47°. The inclination angle of the reflecting mirror 210 relative to the horizontal line is α, that is, α ranges from 45° to 47°. In this way, it can ensure that the reflecting mirror 210 can relatively comprehensively project the light ray emitted by the emission unit 110 out via an emission window 221 after redirecting the light ray, and can relatively comprehensively project the light ray returned by the receiving window 222 to the receiving unit 120 after redirecting the light ray, thereby reducing the energy loss of the emission unit 110, improving the energy utilization of the emission unit 110, and improving the ranging accuracy of the lidar 001.

Specifically, the range of the inclination angle α of the reflecting mirror 210 relative to the horizontal line may be 45°, 45.5°, 46°, 47°, or other angles.

As shown in FIGs. 3, 9, 10, and 11, in the above embodiments, the reflecting mirror 210 includes a reflective surface and a substrate, and the reflective surface is located on a side, facing the emission window 221, of the substrate. In this way, it can ensure that the light ray emitted by the emission unit 110, after being redirected by the reflective surface of the reflecting mirror 210, is projected out via the emission window 221, and the returned received light ray, after being redirected by the reflective surface of the reflecting mirror 210, is received by the unit via the receiving window 222. The reflective surface may be a dielectric high-reflective coating or a metal reflective coating, and the substrate may be glass or plastic.

As shown in FIGs. 10 and 11, in some possible embodiments provided by the present disclosure, the rotating module 200 further includes an optical filter 240 mounted on the rotating base 220, and the optical filter 240 corresponds to the receiving window 222 and is located between the receiving window 222 and the reflecting mirror 210. That is, each receiving window 222 corresponds to one optical filter 240, and the optical filter 240 can perform background optical filtering on the received light ray reflected by an obstacle or a surrounding environment, thereby reducing stray light interference and improving the detection accuracy of the lidar 001.

The optical filter 240 is a narrow-band optical filter 240, and a bandwidth specification of the optical filter 240 is less than or equal to 50 nm to ensure a good filtering effect. Specifically, the bandwidth specification of the optical filter 240 may be 10 nm, 30 nm, 40 nm, 50 nm, or other values.

As shown in FIGs. 1, 3, and 6, in some possible embodiments provided by the present disclosure, the lidar 001 further includes: a driving part 300 and a transmission part 700. The driving part 300 is mounted on the fixed base 130, the transmission part 700 connects the driving part 300 and the rotating base 220, and the driving part 300 drives, by means of the transmission part 700, the rotating base 220 to rotate relative to the fixed base 130. Therefore, the reflecting mirror 210 on the rotating base 220 can rotate around the optical axis of the receiving lens 122, so as to expand the detection range of the lidar 001. For example, the driving part 300 can drive the rotating base 220 to rotate by 360° relative to the fixed base 130, such that the lidar 001 can detect an obstacle or a surrounding environment in a direction of 360° around the cleaning robot 002, thereby improving the sensing precision and the sensing accuracy of the cleaning robot 002, and improving the operation accuracy of the cleaning robot 002.

It can be understood that the transmission part 700 may alternatively be a gear, a transmission belt, or another transmission mechanism. Taking the transmission part 700 being a transmission belt as an example, the driving part 300 is connected to the rotating base 220 through the transmission belt. For example, the driving part 300 is a motor, and an output shaft of the motor is connected to the rotating base 220 through the transmission belt, so as to drive the rotating base 220 to rotate relative to the fixed base 130.

As shown in FIGs. 3, 4, and 6, in some possible embodiments according to the present disclosure, the transmission part 700 is a transmission belt, a second supporting part 135 is disposed in the fixed base 130, and the second supporting part 135 is located below the transmission belt and disposed adjacent to the transmission belt. In this way, when the transmission belt initially derails downward and tends to continue to derail downward, the second supporting part 135 can effectively support the transmission belt, preventing the transmission belt from continuing to derail downward and thus affecting transmission accuracy, thereby ensuring the reliability of the rotation of the rotating base 220 relative to the fixed base 130.

As shown in FIGs. 3, 4, and 6, in some possible embodiments according to the present disclosure, a belt groove 2232 is formed in the rotating base 220, the driving part 300 includes an output shaft and a timing pulley 310 mounted on the output shaft, and a transmission belt is wound around the belt groove 2232 and the output shaft of the driving part 300. In this way, the output shaft of the driving part 300 rotates to drive the timing pulley 310 to perform transmission, such that the rotating base 220 can be driven to rotate relative to the fixed base 130 via the transmission belt.

The second supporting part 135 on the fixed base 130 is located below the belt groove 2232 and disposed adjacent to an opening of the belt groove 2232. In this way, the transmission belt can be effectively supported in the belt groove 2232 by the second supporting part 135, thereby preventing the transmission belt from derailing from the belt groove 2232. It can be understood that, in a normal case, the belt groove 2232 provides a certain limiting function for the transmission belt, such that the transmission belt can be stably seated in the belt groove 2232 to drive the rotating base 220 and the timing pulley 310 to rotate synchronously. In the event that the transmission belt tends to derail from the belt groove 2232, the transmission belt will move to abut against the second supporting part 135. Since the second supporting part 135 is located below the belt groove 2232 and disposed adjacent to the opening of the belt groove 2232, under the support of the second supporting part 135, the transmission belt is still located in the belt groove 2232, and thus will not derail from the belt groove 2232. In this way, the belt groove 2232 and the second supporting part 135 cooperate with each other, which can effectively prevent the rotating base 220 from failing to rotate relative to the fixed base 130 caused by the transmission belt derailing from the belt groove 2232 due to an external force during production or use of the lidar 001, thereby improving the reliability of the lidar 001.

As shown in FIG. 4, in the above embodiments, the top of the second supporting part 135 is not higher than the inner bottom of the belt groove 2232. This arrangement can prevent the rotating base 220 from failing to rotate smoothly due to interference between the top of the second supporting part 135 and the part of the transmission belt exposed outside the belt groove 2232 when the top of the second supporting part is higher than the inner bottom of the belt groove 2232. As a result, the friction between the transmission belt and the top of the second supporting part 135 during rotation of the rotating base 220 can be reduced, thereby helping prolong the service life of the transmission belt.

Specifically, the height difference between the top of the second supporting part 135 and the inner bottom of the belt groove 2232 may be 1 mm to 5 mm. The height difference between the top of the second supporting part 135 and the inner bottom of the belt groove 2232 is reasonably set, such that when friction between the transmission belt and the top of the second supporting part 135 during rotation of the rotating base 220 is reduced as much as possible, it can ensure that the second supporting part 135 provides a good supporting function for the transmission belt that tends to derail from the belt groove 2232, thereby enabling the transmission belt to be reliably limited in the belt groove 2232 and not to derail from the belt groove 2232. Specifically, the height difference between the top of the second supporting part 135 and the inner bottom of the belt groove 2232 may be 1 mm, 2 mm, 3 mm, 5 mm, or another value.

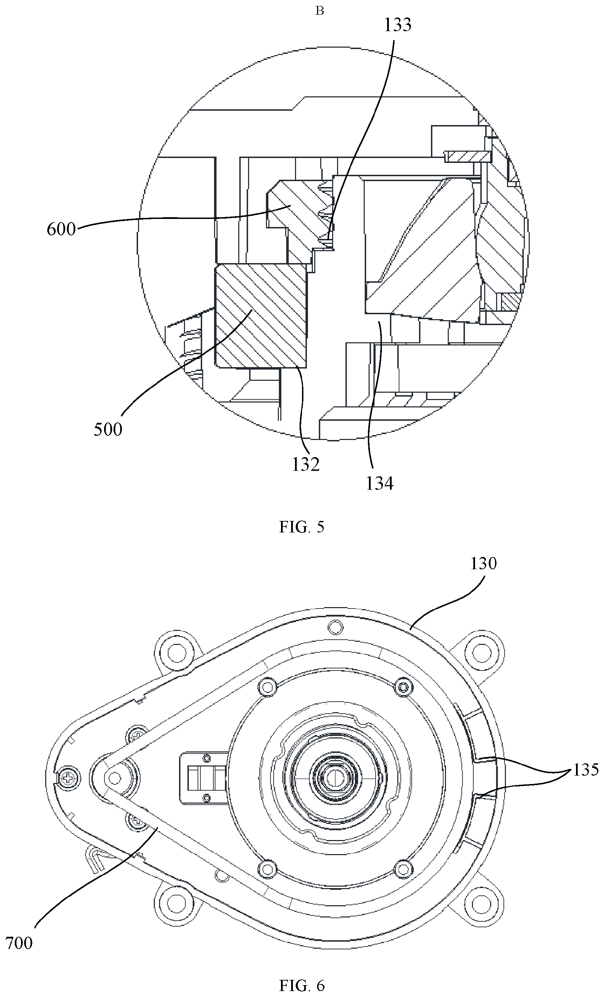

Further, as shown in FIG. 6, since the transmission belt is sleeved on the timing pulley 310, the timing pulley 310 provides a certain supporting force to the transmission belt. The second supporting part 135 and the timing pulley 310 are distributed on two sides of the mounting barrel 140. The second supporting part 135 and the timing pulley 310 support the transmission belt from the two sides, which is beneficial to improving the stability of the movement of the transmission belt, thereby improving the stability of the rotation of the rotating base 220 relative to the fixed base 130 and improving the detection accuracy.

As shown in FIG. 6, one or a plurality of second supporting parts 135 are provided, and the plurality of second supporting parts 135 are spaced apart. The number of second supporting parts 135 may be reasonably set based on a specific structure of the second supporting part 135, thereby providing reliable and stable support for the transmission belt. Specifically, the number of second supporting parts 135 may be one, two, three, or other numbers. Specifically, the second supporting part 135 may be a protruding structure disposed on the fixed base 130.

As shown in FIGs. 13 and 14, in some possible embodiments according to the present disclosure, a first mounting opening is formed at an end of the mounting barrel 140 away from the laser emitter 111 for accommodating the emission lens 112. The lidar 001 further includes a pressing ring 160. The pressing ring 160 is located on a side of the emission lens 112 away from the laser emitter 111, and the pressing ring 160 is connected to the side wall of the first mounting opening to fix the emission lens 112 at the first mounting opening.

During assembly, the emission lens 112 may be first mounted at the first mounting opening, then the emission lens 112 is clamped at the first mounting opening by using the pressing ring 160, and the pressing ring 160 is connected to the side wall of the first mounting opening, such that the emission lens 112 can be reliably and stably fixed on the mounting barrel 140.

Since the emission lens 112 of the lidar 001 according to the embodiment of the present disclosure may have a small dimension and light weight, in the case that the emission lens is directly fixed on the mounting barrel by using an adhesive as in the related art, the injected adhesive may cause the emission lens to float upward, such that the focal length of the emission lens deviates from a design value, resulting in poor measurement accuracy. In addition, in the case that the emission lens is fixed on the mounting barrel by dispensing adhesive at discrete points around the emission lens with a small dimension, the adhesive may easily remain on the lens surface, leading to obstruction of the light spot energy. Therefore, in the present disclosure, the pressing ring 160 is used to clamp the emission lens 112 at the first mounting opening of the mounting barrel 140, and the pressing ring 160 is connected to the side wall of the first mounting opening, thereby ensuring that the design value of the focal length of the emission lens 112 can be accurate, and thus ensuring good measurement accuracy. In addition, the difficulty in dispensing adhesive at discrete spots around the emission lens 112 can be reduced, assembly can be facilitated, and the problem of obstruction of light spot energy by adhesive can be reduced or avoided.

Specifically, the pressing ring 160 and the side wall of the first mounting opening of the mounting barrel 140 may be fixedly connected by means of an adhesive, a threaded structure, a mortise-and-tenon structure, or other structures. Specifically, adhesive may be dispensed at discrete spots around the pressing ring 160 to connect the pressing ring 160 to the side wall of the first mounting opening, which is simple to operate and facilitates assembly, and can ensure the connection reliability between the pressing ring 160 and the side wall of the first mounting opening, thereby improving the clamping reliability of the emission lens 112.

As shown in FIG. 14, in the above embodiment, the side wall of the first mounting opening is provided with a first boss 142. The emission lens 112 includes a first incident surface 1121 and a first exit surface 1122. The first incident surface 1121 overlaps the first boss 142, and the pressing ring 160 is in contact with the first exit surface 1122 and connected to the side wall of the first mounting opening.

The first incident surface 1121 of the emission lens 112 overlaps the first boss 142 to limit the emission lens 112, which can ensure that the position of the emission lens 112 is reasonable, thereby making the focal length thereof meet the design requirements. Then, the pressing ring 160 is used to press against the emission lens 112 from one side of the first exit surface 1122 of the emission lens 112 and is connected to the side wall of the first mounting opening, such that the emission lens 112 can be reliably and stably clamped and fixed on the mounting barrel 140, which is simple to operate and convenient to mount.

As shown in FIG. 14, in the above embodiment, the side wall of the first mounting opening is further provided with a second boss 143. The inner diameter of the first boss 142 is smaller than that of the second boss 143, and the first boss is located on a side of the second boss 143 close to the laser emitter 111; that is, the second boss 143 is close to the outside of the first mounting opening. The first incident surface 1121 is a planar surface, the first exit surface 1122 is a curved surface, and a limiting groove 1123 is formed in the first exit surface 1122. Specifically, the limiting groove 1123 is an annular groove.

In an actual assembly process, the emission lens 112 may be inserted into the mounting barrel 140 from top to bottom from the outside of the first mounting opening, such that the first incident surface 1121 of the emission lens 112 overlaps the first boss 142 to ensure that the position of the emission lens 112 is reasonable, thereby making the focal length thereof meet the design requirements. Then, a mounting end of the pressing ring 160 is inserted into the first mounting opening, and a positioning groove 161 on the inner wall of the mounting end engages with the limiting groove 1123 on the first exit surface 1122 of the emission lens 112, such that the pressing ring 160 cannot continue to move in the direction close to the laser emitter 111, thereby clamping and fixing the receiving lens 122 between the pressing ring 160 and the first boss 142. Subsequently, the outer wall of the mounting end is fixedly connected to the side wall of the first mounting opening to fix the pressing ring 160. In this way, the receiving lens 122 can be firmly clamped and securely fixed at the first mounting opening.

Specifically, the outer wall of the mounting end and the side wall of the first mounting opening may be connected by means of an adhesive to fix the pressing ring 160 to the mounting barrel 140. Since the outer wall of the mounting end is connected to the side wall of the first mounting opening by means of an adhesive, and the positioning groove 161 on the inner wall of the mounting end engages with the limiting groove 1123 on the first exit surface 1122 of the emission lens 112, the possibility of contamination of the emission lens 112 by adhesive can be reduced, and the problem of obstruction of light spot energy due to contamination of the emission lens 112 by adhesive can be avoided.

Since the outer wall of the mounting end is connected to the side wall of the first mounting opening by means of an adhesive, and the positioning groove 161 on the inner wall of the mounting end engages with the limiting groove 1123 on the first exit surface 1122 of the emission lens 112, the possibility of contamination of the emission lens 112 by adhesive can be reduced, and the problem of obstruction of light spot energy due to contamination of the emission lens 112 by adhesive can be avoided.

As shown in FIGs. 3 and 14, in some possible embodiments according to the present disclosure, the lidar 001 further includes: a light-shielding ring 170. The light-shielding ring 170 is sleeved on the outside of the mounting barrel 140 and located above the receiving lens 122, and the light-shielding ring 170 is configured to block at least a part of the light ray directed toward the receiving lens 122, thereby helping improve the detection accuracy of the lidar 001.

Further, a part of the light ray emitted by the laser emitter 111 passes through the emission lens 112 and then is redirected by the reflecting mirror 210 toward the receiving lens 122. Therefore, the arrangement of the light-shielding ring 170 can effectively prevent stray light generated after the emitted light beam passes through the reflecting mirror 210 from returning to the receiving lens 122 to cause optical crosstalk that affects ranging accuracy, thereby helping improve the detection accuracy of the lidar 001.

The light-shielding ring 170 and the mounting barrel 140 may be connected by means of a snap-fit structure and/or an adhesive, such that the operation is simple, the mounting is convenient, and a reliable connection between the light-shielding ring 170 and the mounting barrel 140 can be ensured. Specifically, the light-shielding ring 170 may be connected to the mounting barrel 140 by means of a snap-fit structure or an adhesive, or the light-shielding ring 170 may be connected to the mounting barrel 140 by means of both the snap-fit structure and the adhesive.

A gap is provided between the light-shielding ring 170 and the receiving lens 122, such that the receiving lens 122 and the mounting barrel 140 can move relative to each other. In this way, during assembly, the emission direction of the laser from the emission unit 110 can be universally adjusted relative to the optical axis of the receiving lens 122, avoiding the problem that the mounting barrel 140 and the receiving lens 122 are jammed and thus cannot be adjusted due to tight contact between the light-shielding ring 170 and the receiving lens 122. Specifically, the dimension of the gap provided between the light-shielding ring 170 and the receiving lens 122 may be reasonably designed based on the specific structures of the convex spherical contact surface 141 and the concave spherical contact surface 1221.

As shown in FIG. 3, the mounting barrel 140 and the receiving lens 122 are mounted inside the fixed base 130, that is, in an actual assembly process, the position of the fixed base 130 is fixed. Since the receiving lens 122 sleeves the outside of the mounting barrel 140, when the receiving lens 122 is mounted inside the fixed base 130, the mounting barrel 140 is also indirectly mounted on the fixed base 130.

The emission unit 110 further includes an emission circuit 113 configured as a flexible member. A portion of the emission circuit 113 is mounted inside the mounting barrel 140, and a portion of the emission circuit 113 is located outside the mounting barrel 140. Since the emission circuit 113 is a flexible member, the portion of the emission circuit 113 located outside the mounting barrel 140 may change its position under the action of an external force. For example, when the cleaning robot 002 is subjected to an external force during steering or surmounting an obstacle, the portion of the emission circuit 113 located outside the mounting barrel 140 may be driven to change its position.

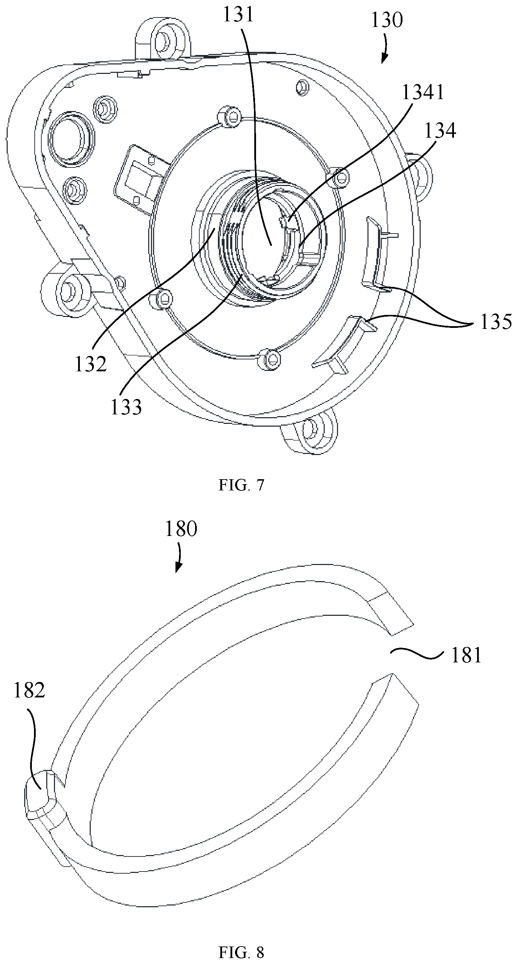

Therefore, as shown in FIG. 8, the lidar 001 of the present disclosure further includes a limiting ring 180. The limiting ring 180 is configured to be in contact with the portion of the emission circuit 113 located outside the mounting barrel 140 to limit the movement of at least a portion of the emission circuit 113, and the portion of the emission circuit 113 located outside the mounting barrel 140 is limited by the limiting ring 180, thereby ensuring the positioning and orientation of a portion of the emission circuit 113, reducing the possibility of the movement of the entire emission circuit 113 when the cleaning robot 002 steers or surmounts an obstacle, and reducing the influence of the movement of the emission circuit 113 on energy distribution of the receiving optical path. Therefore, good detection accuracy is ensured. In addition, compared with using adhesive to fix the part of the emission circuit in the related art, using the limiting ring 180 to limit the emission circuit 113 is beneficial to reducing the overall manufacturing cost of the lidar 001 since the cost of the adhesive is relatively high.

Specifically, the emission circuit of the flexible member may be an FPC (flexible printed circuit, flexible circuit board) or another structure.

In the above embodiment, the laser emitter 111 is arranged on the emission circuit 113, and the emission circuit 113 is mounted at the bottom end of the mounting barrel 140; that is, a part of the emission circuit 113 extends to the outside of the mounting barrel 140 through the bottom end of the mounting barrel 140. It can be understood that since the mounting barrel 140 and the receiving lens 212 are mounted inside the fixed base 130, the part of the emission circuit located outside the mounting barrel 140 is located inside the fixed base 130. Therefore, the limiting ring 180 is mounted inside the fixed base 130 and below the mounting barrel 140, such that the part of the emission circuit 113 located outside the mounting barrel 140 overlaps the limiting ring 180, and then the limiting ring 140 is in contact with the part of the emission circuit 113 to limit the part of the emission circuit 113. In this way, the positioning and orientation of the part of the emission circuit 113 can be ensured, thereby reducing the influence on the energy distribution of the receiving optical path due to the movement of the emission circuit 113 with the cleaning robot 002, and thus ensuring good detection accuracy.

As shown in FIG. 7, in some possible embodiments according to the present disclosure, an annular mounting groove 131 is disposed inside the fixed base 130, a first step 134 is disposed inside the mounting groove 131, and the receiving lens 122 is fixed on the first step 134. Specifically, the receiving lens 122 may be fixed on the first step 134 by means of an adhesive, a snap-fit structure, or another structure.

As shown in FIG. 8, a positioning part located below the first step 134 is further disposed inside the fixed base 130, the limiting ring 180 is provided with a snap-fit part 181, and the positioning part and the snap-fit part 181 are adapted to limit the movement of the limiting ring 180 relative to the fixed base 130. Therefore, the limiting ring 180 can be quickly and conveniently fixed on the fixed base 130 using the positioning part and the snap-fit part 181, and the mounting cost is low. The snap-fit part 181 includes a slot, and/or a notch, and/or a protrusion. In the case where the snap-fit part 181 is a slot and/or a notch, the material consumption of the limiting ring 180 can be further reduced, and the manufacturing cost of the limiting ring 180 can be further reduced, thereby reducing the manufacturing cost of the lidar 001.

A clearance notch 1341 for providing clearance for the emission circuit 113 is formed on the first step 134, an end part of the limiting ring 180 facing the mounting barrel 140 is provided with a protruding first supporting part 182, and the first supporting part 182 is opposite to the clearance notch 1341 to support the emission circuit 113 located in the clearance notch 1341. Therefore, the emission circuit 113 located in the clearance notch 1341 will not fall out of the clearance notch 1341 under the support of the first supporting part 182. That is, the emission circuit 113 located in the clearance notch 1341 is retained in the clearance notch 1341 by the first supporting part 182. As a result, the positioning and orientation of a part of the emission circuit 113 can be ensured, thereby reducing the possibility of the movement of the entire emission circuit 113 when the cleaning robot 002 turns or surmounts obstacles, reducing the influence of the movement of the emission circuit 113 on the energy distribution of the receiving optical path, thus ensuring good detection accuracy.

As shown in FIGs. 3 and 5, the lidar 001 further includes a rotating member 500 and a locking member 600. The rotating member 500 sleeves the outer side of the mounting groove 131 and is connected to the rotating base 220, the locking member 600 sleeves the outer side of the mounting groove 131 and is located above the rotating member 500, and the locking member 600 is connected to the outer wall of the mounting groove 131 to lock the rotating member 500 on the mounting groove 131. That is, in the embodiments, by using a single locking member 600, the rotating member 500 can be locked on the outer wall of the mounting groove 131 to achieve a rotatable connection between the rotating base 220 and the fixed base 130. The structure is simple, and disassembly and assembly are facilitated. However, in the related art, the rotating member usually requires a plurality of components to be locked. For example, in the related art, resilient barbs and screws are usually used in cooperation to lock the rotating member, resulting in a large number of components and a complex assembly process. Therefore, in the embodiments, by using a single locking member 600 to achieve the locking of the rotating member 500, the number of components is reduced, and the assembly process is simple, which can further reduce the manufacturing cost of the time-of-flight lidar 001 and meet the low-cost design requirements of the cleaning robot 002.

As shown in FIG. 7, in the above embodiments, the outer wall of the mounting groove 131 is provided with a second step 132, the rotating member 500 overlaps the second step 132, and the second step 132 is used to pre-position the rotating member 500. This is beneficial to improving the assembly efficiency and assembly accuracy of the rotating member 500, thereby improving the processing efficiency of the time-of-flight radar.

As shown in FIGs. 5 and 7, the outer wall of an end part of the mounting groove 131 facing the rotating base 220 is provided with a threaded structure 133, the locking member 600 is a locking nut, and the rotating member 500 includes an inner ring and an outer ring. For example, the rotating member 500 is a bearing, the locking nut engages with the threaded structure 133, such that the inner ring of the bearing is clamped between the locking nut and the second step 132, and the outer ring of the bearing is connected to the rotating base 220. In this way, by using a single locking nut to engage with the threaded structure 133 on the outer wall of the mounting groove 131, the rotating member 500 can be stably and securely locked outside the mounting groove 131, thereby ensuring the rotatable connection between the rotating base 220 and the fixed base 130. The assembly operation is simple and easy to achieve, the threaded structure 133 on the outer wall of the mounting groove 131 is convenient to process, and the cost of the locking nut is low, which can effectively reduce the manufacturing cost of the time-of-flight radar.

Further, as shown in FIG. 3, the inner wall of the mounting groove 131 is in communication with the inside and outside of the mounting chamber; that is, the mounting groove 131 is a through groove. The mounting groove 131 extends through the fixed base 130, the main circuit 400 is mounted at the bottom of the fixed base 130 and located outside the mounting chamber, and the main circuit 400 is electrically connected to the emission circuit 113 and the receiving circuit through the mounting groove 131. Since the main circuit 400 is located outside the mounting chamber, the connection between the main circuit 400 and a power supply part is facilitated, and the maintenance and replacement of the main circuit 400 is facilitated. In addition, the main circuit 400 located outside the mounting chamber has good ventilation and heat dissipation effects, avoiding the problem that the main circuit is prone to failure due to poor ventilation and heat dissipation effects when arranged inside the mounting chamber, and thus helping prolong the service life of the main circuit 400 and improve the reliability of the time-of-flight lidar 001.

As shown in FIGs. 11 and 15, in some possible embodiments according to the present disclosure, the receiver 121 is located below the laser emitter 111, the receiving lens 122 is located below the emission lens 112, and in a plane perpendicular to the optical axis of the emission lens 112 and/or the optical axis of the receiving lens 122, a projection of the receiving lens 122 is located on an outer peripheral side of a projection of the emission lens 112. The receiver 121 is a single-photon receiver 121.

With this arrangement, the receiver 121 is prevented from blocking the light ray emitted by the laser emitter 111, thereby reducing optical energy loss of the laser emitter 111 and improving the optical energy utilization of the laser emitter 111. It can be understood that the received light ray returned from the obstacles and the surrounding environment, after being redirected by the receiving lens 122, can be in contact with the receiver 121.

As shown in FIG. 15, in the embodiments, since the projection of the receiving lens 122 is located on the outer peripheral side of the projection of the emission lens 112 in the plane perpendicular to the optical axis of the emission lens 112 and/or the optical axis of the receiving lens 122, the effective area of the receiving lens 122 is small. Therefore, the receiver 121 is configured as a single-photon receiver 121. For example, the receiver 121 is a single-photon receiver 121 employing a SPAD (single photon avalanche diode, single-photon detector), which has significant advantages in terms of integration level, optical gain, accuracy, etc. than exemplary optical receivers 121 such as a PIN (positive-intrinsic-negative, photodiode) and an APD (avalanche photon diode, avalanche diode), thereby ensuring the detection accuracy of the time-of-flight lidar 001.

As shown in FIG. 16, in the second aspect of the present disclosure, a cleaning robot 002 is provided, which includes: a device main body 021; and the lidar 001 according to any embodiment of the first aspect, the lidar 001 being disposed on the device main body 021. Since the cleaning robot 002 is provided with the lidar 001 according to any one of the embodiments of the first aspect, the cleaning robot 002 has all the beneficial technical effects of the lidar 001, and details are not described herein again.

Further, the cleaning robot 002 is further configured for a cleaning system. That is, the cleaning system includes the cleaning robot 002 and a cleaning docking station. The cleaning robot 002 includes the lidar 001, and the lidar 001 plays a vital role in operating conditions such as mapping, navigation, and obstacle avoidance. Therefore, the cleaning robot 002 can accurately return to the cleaning docking station under the action of the lidar 001. Specifically, when the cleaning robot 002 starts to operate, the cleaning robot 002 departs from the cleaning docking station to perform a cleaning task. When the cleaning robot 002 completes the cleaning task or in other cases where the cleaning task needs to be suspended, the cleaning robot 002 may return to the cleaning docking station for operations such as charging, and/or water replenishment, and/or cleaning, and/or dust collection.

The present disclosure has been described with reference to the above embodiments. It should be understood that, however, the above embodiments are only for the purpose of illustration and description and are not intended to limit the present disclosure to the scope of the embodiments described. In addition, those skilled in the art can understand that the present disclosure is not limited to the above embodiments. More variations and modifications can be made according to the teachings of the present disclosure, and these variations and modifications all fall within the protection scope of the present disclosure. The protection scope of the present disclosure is defined by the appended claims and their equivalents.

## Claims

1. A lidar (001), wherein the lidar comprises:
a fixed module (100), the fixed module (100) comprising a fixed base (130), and an emission unit (110) and a receiving unit (120) that are mounted on the fixed base (130); and
a rotating module (200), the rotating module (200) comprising a rotating base (220) and a reflecting mirror (210) mounted on the rotating base (220), the rotating base (220) being rotatably connected to the fixed base (130), the reflecting mirror (210) being obliquely disposed above the emission unit (110) and the receiving unit (120), the rotating base (220) being provided with an emission window (221) and receiving windows (222), and the receiving windows (222) being distributed on two sides of the emission window (221) in pairs;
wherein an emitted light ray emitted by the emission unit (110) is changed in direction by the reflecting mirror (210) and then projected out through the emission window (221), and a returned received light ray passes through the receiving window (222), is changed in direction by the reflecting mirror (210), and then is received by the unit.

2. The lidar (001) according to claim 1, wherein
a dimension of the reflecting mirror (210) comprises a first dimension Dv and a second dimension Dh that are perpendicular to each other, a direction of the first dimension is parallel to a horizontal line, a dimension of an emission aperture of the emission unit (110) is D1, and a dimension of a receiving aperture of the receiving unit (120) is D2;
wherein Dv satisfies that: D1 < Dv/1.414 < D2, and Dh satisfies that: D2 < Dh.

3. The lidar (001) according to claim 2, wherein
an opening area of the emission window (221) is greater than an exit area of the emission aperture.

4. The lidar (001) according to claim 1, wherein the rotating module (200) further comprises:
a first window lens (230), the first window lens (230) being mounted on the rotating base (220) and corresponding to the emission window (221), and the first window lens (230) being configured to shield the emission window (221);
wherein the first window lens (230) is disposed obliquely relative to a light output axis of the reflecting mirror (210).

5. The lidar (001) according to claim 4, wherein
a range of an inclination angle of the first window lens (230) relative to the light output axis of the reflecting mirror (210) is at least 2° and no more than 45°.

6. The lidar (001) according to claim 4, wherein
the rotating base (220) comprises a base body (223) and an upper cover (224) that are detachably connected, the base body (223) is provided with a first slot (2231), the upper cover (224) is provided with a second slot (2241), and the upper cover (224) is connected to the base body (223), to clamp two ends of the first window lens (230) in the first slot (2231) and the second slot (2241), respectively.

7. The lidar (001) according to claim 1, wherein
the emission unit (110) comprises a laser emitter (111) and an emission lens (112) that are sequentially disposed, the receiving unit (120) comprises a receiver (121) and a receiving lens (122) that are sequentially disposed, and the emission lens (112) and the receiving lens (122) are coaxially disposed.

8. The lidar (001) according to claim 7, wherein
the rotating base (220) is configured to rotate relative to the fixed base (130) with an optical axis of the emission lens (112) and/or an optical axis of the receiving lens (122) as a rotation axis;
wherein a diameter of the emission lens (112) is equal to a dimension of an emission aperture of the emission unit (110), and a diameter of the receiving lens (122) is equal to a dimension of a receiving aperture of the receiving unit (120).

9. The lidar (001) according to claim 7, wherein
the fixed module (100) further comprises a mounting barrel (140) with openings at two ends, and the laser emitter (111) and the emission lens (112) are mounted at the two ends of the mounting barrel (140), respectively; and
a middle portion of the receiving lens (122) is provided as a hollow structure, the mounting barrel (140) passes through the hollow structure and is connected to the receiving lens (122), and the receiver (121) is arranged below the receiving lens (122) and opposite to the laser emitter (111).

10. The lidar (001) according to claim 9, wherein
a range of a diameter of the receiving lens (122) is at least 10 mm and no more than 20 mm; and/or
a range of a diameter of the hollow structure is at least 5 mm and no more than 10 mm; and/or
a range of a focal length of the receiving lens (122) is at least 8 mm and no more than 20 mm; and/or
a range of a ratio of the diameter to the focal length of the receiving lens (122) is at least 0.8 and no more than 2.2; and/or
a range of a diameter of the emission lens (112) is at least 3 mm and no more than 8 mm; and/or
a range of a focal length of the emission lens (112) is at least 3 mm and no more than 10 mm.

11. The lidar (001) according to claim 9, wherein
fitting surfaces of the mounting barrel (140) and the receiving lens (122) are in spherical contact, and the mounting barrel (140) and the receiving lens (122) are configured to be fixedly connected.

12. The lidar (001) according to claim 7, wherein
the fixed module (100) further comprises a light-homogenizing element (150), and the light-homogenizing element (150) is located between the receiver (121) and the receiving lens (122).

13. The lidar (001) according to claim 1, wherein
an inclination angle of the reflecting mirror (210) relative to a horizontal line is at least 45° and no more than 47°.

14. The lidar (001) according to claim 1, wherein
the reflecting mirror (210) comprises a reflective surface and a substrate, the reflective surface being located on a side of the substrate facing the emission window (221);
wherein the reflective surface is a dielectric high-reflection film or a metal reflection film, and the substrate is glass or plastic.

15. The lidar (001) according to claim 1, wherein
the rotating module (200) further comprises an optical filter (240) mounted on the rotating base (220), and the optical filter (240) corresponds to the receiving window (222) and is located between the receiving window (222) and the reflecting mirror (210).

16. The lidar (001) according to claim 15, wherein a bandwidth specification of the optical filter (240) is less than or equal to 50 nm.

17. The lidar (001) according to claim 1, wherein the lidar further comprises:
a driving part (300) and a transmission part (700), the driving part (300) being mounted on the fixed base (130), the transmission part (700) connecting the driving part (300) and the rotating base (220), and the driving part (300) driving, by means of the transmission part (700), the rotating base (220) to rotate relative to the fixed base (130).

18. The lidar (001) according to claim 1, wherein
the number of the receiving windows (222) is at least one pair.

19. A cleaning robot (002), wherein the cleaning robot comprises:
a device main body; and
the lidar (001) according to any one of claims 1 to 18, the lidar (001) being disposed in the device main body.
